# EUROPÄISCHE PATENTANMELDUNG

(11) **EP 2 108 899 A2**
(43) Veröffentlichungstag der Anmeldung: **14.10.2009**
(21) Anmeldenummer: 09005098.0
(22) Anmeldetag: 07.04.2009
(51) Int. Cl.: F24J 2/52

(54) **Aufständerungssystem**

(30) Priorität: 09.06.2008 DE 102008027452; 07.04.2008 DE 202008004756 U; 09.06.2008 DE 102008027451; 23.04.2008 DE 202008005647 U
(71) Anmelder: Deutsche Solar Werke GmbH & Co. KG, 80807 München (DE)
(72) Erfinder: Schönberger, Michael, 81377 München (DE); Schönberger, Florian, 81373 München (DE)
(74) Vertreter: Banzer, Hans-Jörg

(57) **Zusammenfassung**

Aufständerungssystem zur Befestigung eines Solarmoduls, mit einem ersten Verbindungsträger (20), der eine Seitenkante eines Solarmoduls (10) hält, und einem zweiten Verbindungsträger (20), der eine andere Seitenkante des Solarmoduls (10) hält, wobei das Solarmodul (10) als tragendes Modul an den beiden Seitenkanten gehalten die beiden Verbindungsträger (20) verbindet,
wobei das Aufständerungssystem für den ersten und den zweiten Verbindungsträger jeweils einen ersten und einen zweiten Stützträger (22, 23) umfasst, die an einem Ende und an dem anderen Ende des jeweiligen Verbindungsträgers (21) angeordnet sind und mit denen die Aufständerungsvorrichtung auf einem Untergrund (30) befestigt ist.

## Beschreibung

Die vorliegende Erfindung betrifft ein Aufständerungsystem für ein Photovoltaikmodul oder Solarmodul (Solarthermie). Die Erfindung findet Anwendung bei der Befestigung von Photovoltaikmodulen/Solarmodulen auf Freiflächen oder Dächern. Die Erfindung findet insbesondere, jedoch nicht ausschließlich, bei der Befestigung von so genannten Dünnschichtmodulen Anwendung.

Gemäß dem Stand der Technik werden zur Befestigung von Solarmodulen Aufständerungssysteme verwendet, welche in sich selbst tragend sind. Auf diese Aufständerungssysteme, welche zumeist einen umlaufenden Rahmen aufweisen, werden die Photovoltaikmodule bzw. Solarmodule verschiedener Bauart befestigt. Das Aufständerungssystem hat hierbei die tragende Funktion für die aufgesetzten Solarmodule.

Durch einen derartigen Aufbau ist ein großer Materialeinsatz notwendig, wodurch Solarsysteme unnötig verteuert werden. Weiterhin kann bei Befestigung auf Dächern das Gewicht der Rahmen der Aufständerungssysteme ein limitierender Faktor sein. Ein weiterer Nachteil bei bekannten Aufständerungssystemen liegt darin, dass der Verbau von rahmenlosen Laminatmodulen kompliziert ist, da diese in das Aufständerungssystem geklemmt werden müssen.

Weiterhin werden im Stand der Technik zur Befestigung von Solarmodulen Aufständerungsvorrichtungen verwendet, die aus Materialien bestehen, die selbst elektrisch leitend sind. Insbesondere bei der Installation von Modulen in der Dünnschichttechnologie in Verbindung mit Wechselrichtern, welche ohne Transformatoren arbeiten, ergibt sich das Problem, dass ein von den Wettereinflüssen abhängiger elektrischer Strom über das Aufständerungssystem gegen die Erde fließt. Dieser beschleunigt den Alterungsprozess der Module aufgrund einer bis heute noch nicht genau verstandenen Ursache. Weiterhin wird vermutet, dass dieser Alterungsprozess für die zeitliche Abnahme des Solarmodulwirkungsgrades verantwortlich ist. Es ist daher wünschenswert, eine Aufständerungsvorrichtung für ein Solarmodul bereitzustellen, bei dem der Stromfluss gegen die Erde verhindert wird, wobei eine schnelle und fehlerfreie Montage gewährleistet sein soll.

Aufgabe der vorliegenden Erfindung ist es, Solarmodule mit geringem Materialeinsatz verbauen zu können und gleichzeitig den Verbau von Laminaten bzw. rahmenlosen Modulen zu erleichtern.

Diese Aufgabe wird durch ein Aufständerungssystem gemäß Patentanspruch 1 gelöst. In den abhängigen Ansprüchen sind bevorzugte Ausführungsformen der Erfindung beschrieben.

Das erfindungsgemäße Aufständerungssystem zur Befestigung eines Solarmoduls weist einen ersten Verbindungsträger , der eine Seitenkante eines Solarmoduls hält, und einen zweiten Verbindungsträger auf, der eine andere Seitenkante des Solarmoduls hält, wobei das Solarmodul als tragendes Modul an den beiden Seitenkanten gehalten die beiden Verbindungsträger verbindet. Das Aufständerungssystem umfasst für den ersten und den zweiten Verbindungsträger jeweils einen ersten und einen zweiten Stützträger, die an einem Ende und an dem anderen Ende des jeweiligen Verbindungsträgers angeordnet sind und mit denen das Aufständerungssystem auf einem Untergrund befestigt ist. Beispielsweise können der erste und der zweite Verbindungsträger und die jeweiligen Stützträger Teil einer ersten bzw. zweiten Aufständerungsvorrichtung sein.

Das Solarmodul ist als tragendes Modul an den beiden Seitenkanten gehalten und verbindet die beiden Verbindungsträger, wodurch eine Art Fachwerkaufbau erhalten wird, in welchem die Solarmodule eine tragende Rolle übernehmen. Die Solarmodule, die als tragendes Modul die beiden Verbindungsträger miteinander verbinden, können auf unterschiedliche Weise an den Verbindungsträgern befestigt sein. Sie können über die Klemmleiste eingeklemmt sein, wie oben beschrieben. Ebenso können die Module direkt auf den Vorsprüngen der Verbindungsträger festgeschraubt oder anderweitig befestigt sein.

Bei einer Ausführungsform der Erfindung ist der erste und der zweite Verbindungsträger jeweils durchgehend und bildet eine Auflagefläche für ein Solarmodul oder für mehrere, nebeneinander angeordnete Solarmodule. Ein oder mehrere Solarmodule können somit ohne das Erzeugen von Verwindungen sicher gehalten werden.

Das Solarmodul kann über die gesamte Länge der jeweiligen Seitenkante auf dem ersten und dem zweiten Verbindungsträger aufliegen.

Die beiden Stützträger einer Aufständerungsvorrichtung können beispielsweise auf zwei parallel verlaufenden Grundträgern befestigt sein.

Bei einer Ausführungsform des Aufständerungssystems weist der erste und zweite Verbindungsträger jeweils einen Vorsprung sowie eine Klemmleiste auf, die an dem Verbindungsträger befestigbar ist. Das Solarmodul bzw. die eine Seitenkante des Solarmoduls ist nun zwischen dem Vorsprung und der am Verbindungsträger befestigten Klemmleiste klemmend gehalten. Durch das Einklemmen einer Seitenkante des Solarmoduls kann das Solarmodul durch den Verbindungsträger an dieser Seitenkante gehalten werden, das Anbringen eines Rahmens bzw. Unterbaus auf dem das Solarmodul aufliegt und der zwei benachbarte Verbindungsträger auf Höhe der Solarmodule verbindet, ist nicht notwendig. Hierdurch wird der Materialaufwand je verbauter Solarfläche deutlich verringert.

Das Solarmodul wird an der anderen Seitenkante von der zweiten, benachbarten Aufständerungsvorrichtung gehalten, wobei das Solarmodul als tragendes Element die beiden Aufständerungsvorrichtungen miteinander verbindet. Durch das Einklemmen der beiden gegenüberliegenden Seitenkanten des Solarmoduls an benachbarten Verbindungsträgern verbinden die Solarmodule die einzelnen Verbindungsträger miteinander, ohne dass in der Ebene des Solarmoduls weitere Verbindungen zwischen den Verbindungsträgern notwendig sind. Alternativ zur Klemmung kann das Solarmodul auch mit den Verbindungsträgern verschraubt oder anderweitig verbunden werden. Durch die Tatsache, dass die Solarmodule nur an ihren Seitenkanten ohne darunter liegenden Rahmen gehalten werden können, können Solarmodule unterschiedlicher Modulgrößen auf einfache Weise verbaut werden, da nur die Modulgröße den Abstand zwischen zwei Verbindungsträgern definiert.

Die Klemmleiste kann im befestigten Zustand im Wesentlichen parallel zur jeweiligen Fläche des Verbindungsträgers angeordnet sein, wobei sie im befestigten Zustand seitlich über den Verbindungsträger derart übersteht, dass die Klemmleiste mit dem Vorsprung eine Aufnahme zur Aufnahme der Seitenkante des Solarmoduls bildet. Der Vorsprung ist vorzugsweise an einer Seitenfläche des Befestigungsträgers ausgebildet, wobei im verbauten Zustand die Seitenkante des Solarmoduls auf dem Vorsprung aufliegt.

Weiterhin ist vorzugsweise jeweils ein Vorsprung an gegenüberliegenden Seitenflächen des Verbindungsträgers ausgebildet, wobei in einer ersten Lage des Verbindungsträgers jeweils zwischen dem Vorsprung und der Klemmleiste eine Aufnahme mit einer ersten Dicke gebildet wird, so dass ein Solarmodul mit einer ersten Dicke einklemmbar ist. Wenn nun der Befestigungsträger entlang seiner Längsachse, vorzugsweise um 180° gedreht wird, wird zwischen Klemmleiste und dem Vorsprung jeweils eine Aufnahme einer zweiten Dicke gebildet, in der ein Solarmodul mit einer zweiten Dicke einklemmbar ist, die größer als die erste Dicke ist. Durch die Veränderung kann jede beliebige Dicke geklemmt werden. Solarmodule können im gerahmten oder ungerahmten Zustand verbaut werden. Ohne Rahmen weisen die Solarmodule eine geringe Dicke auf, während sie im gerahmten Zustand eine größere Dicke haben. Durch das Anbringen der Vorsprünge an zwei gegenüberliegenden Seitenflächen des Verbindungsträgers und durch Anbringen der Vorsprünge nicht mittig an einer Seitenfläche können durch Rotation des Befestigungsträgers Solarmodule mit zwei unterschiedlichen Dicken verbaut werden. Diese unterschiedlichen Dicken können sich beispielsweise durch die Verwendung von ungerahmten und gerahmten Modulen ergeben.

Für eine bessere Klemmwirkung kann die Klemmleiste Versteifungsrippen in Längsrichtung der Klemmleiste aufweisen. Die Versteifungsrippen können den Aufpressdruck der Klemmleiste auf die Seitenkante des Solarmoduls erhöhen. Für eine geringer Aufbauzeit des Solarsystems bestehend aus Solarmodul und Aufständerungsvorrichtung ist es möglich, die Klemmleiste ohne Vorbohrung mit dem Befestigungsträger zu verschrauben. Da die Klemmleiste vorzugsweise über die gesamte Länge des Verbindungsträgers verläuft und diese auf dem Verbindungsträger befestigt werden muss, kann durch den Verzicht von vorgestanzten Bohrungen die Herstellung insofern erleichtert werden, dass nicht darauf geachtet werden muss, ob vorgefertigte Bohrungen in der Klemmleiste mit Bohrungen in dem Verbindungsträger übereinander liegen. Vorzugsweise ist die Klemmleiste derart ausgebildet, dass sie die Seitenkanten von zwei benachbarten Solarmodulen klemmend befestigt, wenn sie am Verbindungsträger befestigt ist. Für einen besseren Halt der Seitenkanten der Solarmodule verlaufen vorzugsweise der Vorsprung und die Klemmleiste im Wesentlichen über die gesamte Länge des Verbindungsträgers.

Weitere Ausführungsformen zum Halten des Solarmoduls sind ebenfalls denkbar. Vorzugsweise weisen der erste und der zweite Verbindungsträger jeweils einen Vorsprung auf, wobei die Seitenkante des Solarmoduls über eine kraftschlüssige oder formschlüssige Verbindung mit dem Vorsprung des jeweiligen Verbindungsträgers zum Halten des Solarmoduls verbunden ist. Bei einer Ausführungsform umfassen die Seitenkanten des Solarmoduls eine Rahmung, wobei die Rahmung mittels eines Klemmelements zum Ausbilden einer kraftschlüssigen Verbindung an dem Vorsprung des jeweiligen Verbindungsträgers festgeklemmt ist. Das Solarmodul kann somit auf einfache Weise auf beide Verbindungsträger montiert werden.

Gemäß einem weiteren Aspekt der vorliegenden Erfindung wird eine Aufständerungsvorrichtung bereitgestellt, die einen Verbindungsträger zur Halterung des Solarmoduls und zwei Stützträger aufweist, die den Verbindungsträger stützten und mit denen der Verbindungsträger mit einem Untergrund verbunden ist. Zwischen dem Verbindungsträger und dem Stützträger ist nun jeweils ein Verbindungselement aus nicht leitendem Material angeordnet, dass das Solarmodul gegenüber dem Untergrund isoliert. Die in die Aufständerungsvorrichtung eingefügten Verbindungselemente aus nicht leitendem Material verhindern die Entstehung des Stromes zur Erde bzw. zum Untergrund auf dem die Aufständerungsvorrichtung angeordnet ist. Vorzugsweise sind der Verbindungsträger und der Stützträger aus leitendem Material ausgebildet, wie beispielsweise Aluminium. Das nicht leitende Verbindungselement verbindet dann den leitenden Stützträger mit dem leitenden Verbindungsträger. Durch die Verbindungselemente kann die Aufständerungsvorrichtung schnell und einfach montiert werden. Weiterhin werden Fehler bei der Montage verhindert, da die Verbindungselemente einfach mit dem Verbindungsträger verbunden werden können. Eine oder mehrere derartige Aufständerungsvorrichtungen können auch bei dem vorab genannten Aufständerungssystem zum Einsatz kommen.

Das Verbindungselement ist vorzugsweise lösbar mit dem Verbindungsträger und dem Stützträger verbunden. Dies hat den Vorteil, dass das Verbindungselement bei der Montage jeweils in den Verbindungsträger und den Stützträger eingesteckt werden kann und so diese miteinander verbindet. Hierfür kann das Verbindungselement ein Kopfstück und zwei Kupplungselemente aufweisen, die im Montagezustand in den Verbindungsträger und den Stützträger eingeführt sind, wobei das Kopfstück den Kontakt zwischen Verbindungsträger und Stützträger verhindert. Die beiden Kupplungselemente können weiterhin eine Bohrung aufweisen zur Durchführung eines Verbindungsstifts oder einer Schraube mit denen das Verbindungselement an dem Verbindungsträger bzw. an dem Stützträger befestigt werden kann. Zur weiteren Isolierung kann im Falle eines längeren und eines kürzeren Stützträgers zwischen dem längeren Stützträger und dem Untergrund ein weiteres nicht leitendes Verbindungselement vorgesehen sein, das zusätzlich für eine Isolierung des Solarmoduls gegenüber dem Untergrund sorgt. Im Untergrund kann der Stützträger beispielsweise auf einem Querträger angeordnet und befestigt sein.

Die Erfindung wird nachfolgend unter Bezugnahme auf die beiliegenden Zeichnungen näher erläutert. Hierbei zeigen:
- Fig. 1: eine Schrägansicht eines erfindungsgemäßen Aufständerungssystems mit tragenden Solarmodulen,
- Fig. 2: eine Detailansicht zur Befestigung des Solarmoduls am oberen Ende eines Verbindungsträgers in dem Aufständerungssystem,
- Fig. 3: eine weitere Detailansicht mit der Befestigung von Solarmodulen am unteren Ende eines Verbindungsträgers, und
- Fig. 4: eine weitere Detailansicht des Aufständerungssystems von Fig. 1.
- Fig. 5: eine perspektivische Ansicht eines Verbindungselements, das am oberen Ende eines Stützträgers des Aufständerungssystems verwendet wird,
- Fig. 6: eine perspektivische Ansicht eines Verbindungselements, das am unteren Ende des Verbindungsträgers verwendet wird, und
- Fig. 7: eine perspektivische Ansicht des Aufständerungssystems mit einer Befestigung im Boden.
- Fig. 8: zeigt eine Schnittansicht mit einer weiteren Möglichkeit der Befestigung von Solarmodulen an den Verbindungsträgern.

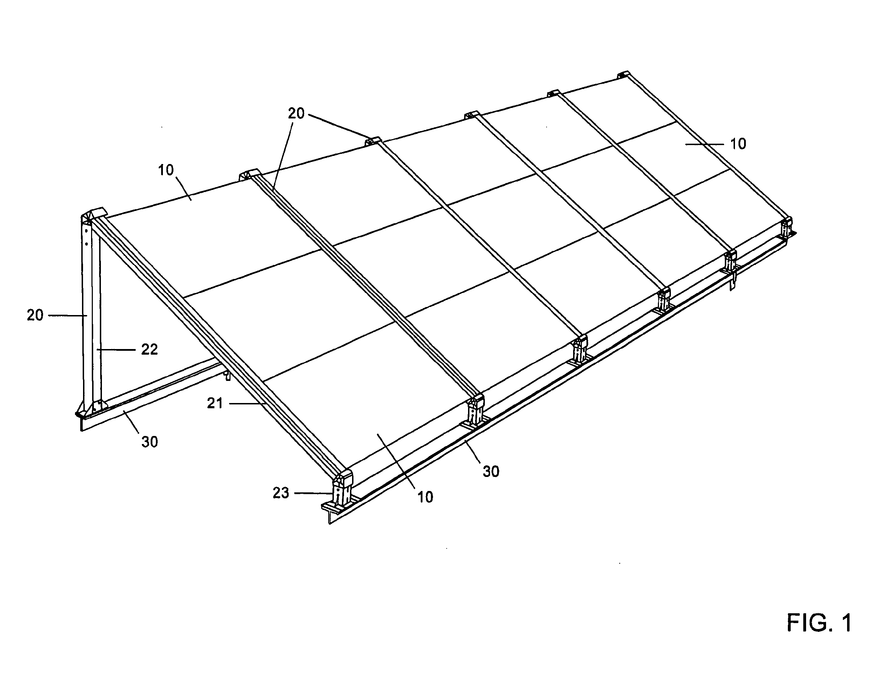

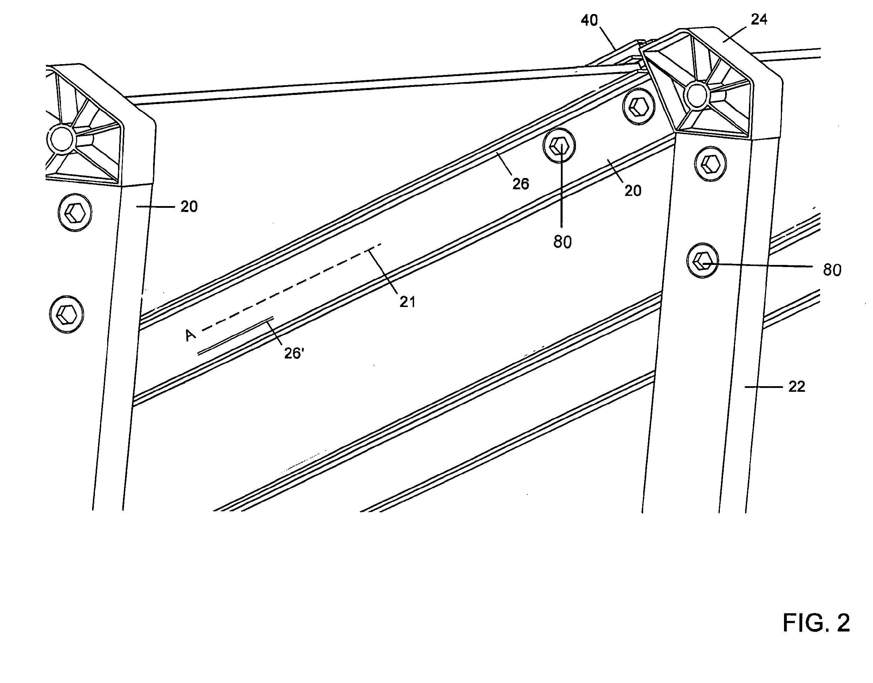

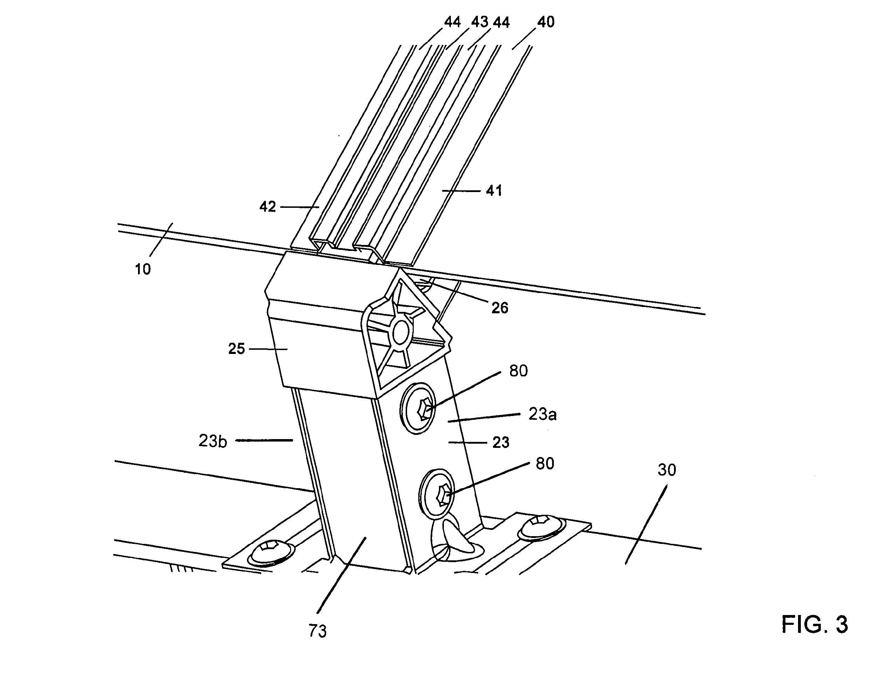

Das Aufständerungssystem für Solarmodule von Fig. 1 zeigt mehrere Solarmodule 10, die von mehreren Aufständerungsvorrichtungen 20 gehalten werden. Eine Aufständerungsvorrichtung 20 weist einen Verbindungsträger 21 auf, der von zwei Stützträgern 22 und 23 gehalten wird, die jeweils auf Grundträgern wie beispielsweise T-Trägern 30 befestigt sind. Wie unter anderem in Figuren 2 und 3 zu erkennen ist, sind die Solarmodule 10 die tragenden Elemente zwischen den Aufständerungsvorrichtungen 20 und bilden die Querverstrebungen zwischen den Aufständerungsvorrichtungen 20. Wie unter anderem in Fig. 2 zu erkennen ist, sind die Aufständerungsvorrichtungen 20 in der Ebene der Solarmodule nicht über ein weiteres Rahmengestell verbunden. Die mechanische Festigkeit wird unten durch die Verbindung mit den beiden T-Trägern 30 und oben durch die Solarmodule selbst erreicht.

Wie unter anderem in Fig. 2 und Fig. 3 zu erkennen ist, sind die Stützträger 22 und 23 über ein Verbindungselement 24 und 25 mit dem Verbindungsträger 21 verbunden. Der Verbindungsträger und die Stützträger können beispielsweise aus Aluminium oder jedem anderen leichten, nichtrostenden Metall oder Stahl gebildet sein, während die Verbindungselemente 24, 25 vorzugsweise aus Kunststoff gebildet sind und in den Verbindungsträger 21 und die beiden Stützträger 22 und 23 eingesetzt sind.

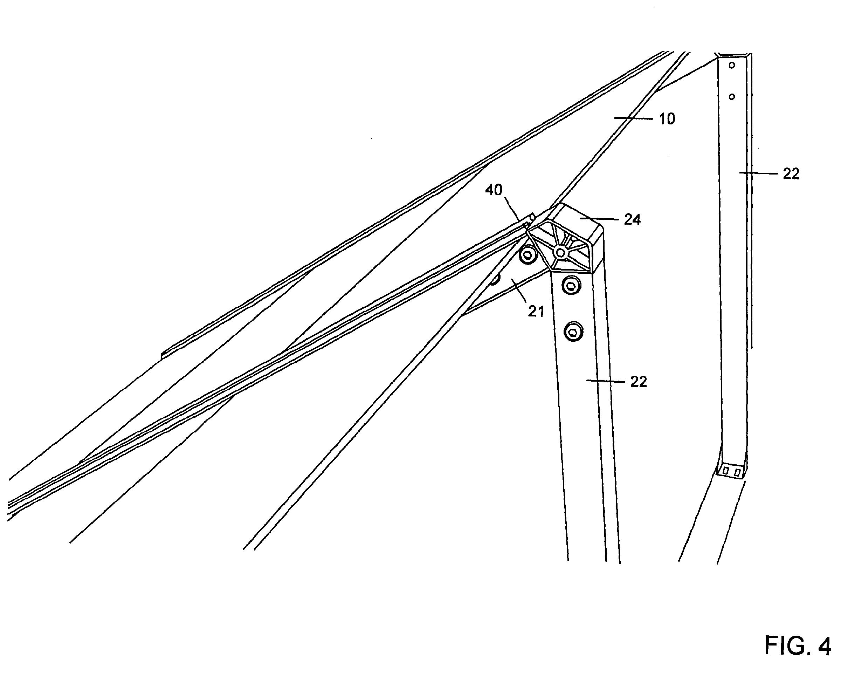

An den Seitenflächen des Verbindungsträgers 21 sind Vorsprünge 26 ausgebildet, die parallel zur Längsachse A des Verbindungsträgers verlaufen wie in Fig. 2 zu erkennen ist. Auf diesen Vorsprüngen liegen die Solarmodule auf. Wie am besten in Fig. 3 zu erkennen ist, ist auf der Oberseite des Verbindungsträgers eine Klemmleiste 40 angebracht, die mit ihren Seitenflächen 41 und 42 in Verbindung mit dem Vorsprung 26 eine Aufnahme für das Solarmodul bildet. Vorzugsweise ist der Abstand zwischen dem Vorsprung 26 und der Seitenfläche 41 derart ausgebildet, dass ein Solarmodul mit einer vorbestimmten Dicke in der Aufnahme eingeklemmt ist, wenn die Klemmleiste auf der Oberfläche des Verbindungsträgers mit nicht gezeigten Befestigungsvorrichtungen wie beispielsweise Schrauben befestigt ist. Die Befestigung der Klemmleiste an dem Verbindungsträger kann beispielsweise in einem Mittelsteg 43 erfolgen, der benachbart zu zwei Versteifungsrippen 44 liegt. Die Versteifungsrippen 44 dienen zur mechanischen Versteifung der Klemmleiste und bewirken einen dauerhaften Aufpressdruck der Seitenflächen 41 und 42 auf die Seitenkante des Solarmoduls 10. Beim Verbau der Solarmodule werden diese bei nicht aufgebrachter Klemmleiste auf die Vorsprünge 26 gelegt, wobei nach Anbringen der Solarmodule 10 die Klemmleiste 40 auf den Verbindungsträger und die beiden Seitenkanten von zwei benachbarten Solarmodulen 10 aufgesetzt und an dem Verbindungsträger befestigt. Die beiden Stützträger 22, 23 können jeweils auf die Grundträger 30 aufgeschraubt werden, wie es in den Figuren 1, 3 und 4 schematisch zu erkennen ist.

In Fig. 2 ist zu erkennen, dass der Vorsprung 26 nicht in der Mitte der Seitenfläche auf der Längsachse A des Verbindungsträgers ausgebildet ist, sondern versetzt dazu. Bei der in den Figuren dargestellten Ausführungsform ist der Verbindungsträger derart über die Verbindungselemente 24, 25 mit den Stützträgern 22 und 23 verbunden, dass sich zwischen Klemmleiste und Vorsprung 26 ein kleiner Abstand bildet, so dass beispielsweise Dünnschichtmodule gut befestigt werden können. Wird nun der Verbindungsträger, der in Fig. 2 dargestellt ist, um seine Längsachse A um 180° rotiert und wiederum über die Verbindungselemente 24 und 25 mit den Stützträgern 22, 23 verbunden, so liegt der in Fig. 2 dargestellte Vorsprung 26 auf der anderen durch den Verbindungsträger verdeckten Seite, wobei der Vorsprung, der auf der anderen verdeckten Seite lag durch die Rotation um 180° auf der in Fig. 2 dargestellten Seite zu liegen kommen würde. Durch die nicht auf der Achse ausgebildeten Vorsprünge liegen diese bei einer Rotation von 180° in einer anderen Position, wie es durch das Bezugszeichen 26' angedeutet ist. Zwischen dem Vorsprung 26' und der gleichbleibenden Klemmleiste kann nun ein Solarmodul größerer Dicke eingeklemmt werden, beispielsweise ein in einem Rahmen eingebautes Solarmodul. Die Verbindungsträger sind folglich lösbar mit den Stützträgern über die lösbaren Verbindungselemente 24, 25 verbunden, wobei durch einfache Rotation um 180° Solarmodule mit unterschiedlicher Dicke befestigt werden können. Weiterhin ist es möglich, die Solarmodule ohne Klemmleiste direkt an dem Verbindungsträger zu befestigen, z. B. indem sie mit den Verbindungsträgern verschraubt werden und als tragende Module die beiden Aufständerungsvorrichtungen miteinander verbinden.

Weiterhin ist in Fig. 2 zu erkennen, wie das obere Ende des Verbindungsträgers 21 mit dem Stützträger 22 verbunden ist. Ein Verbindungselement 24 aus nicht leitendem Material wie beispielsweise Kunststoff, z.B. Polyamid, verbindet den Verbindungsträger mit dem Stützträger 22. Das Verbindungselement 24 verhindert einen mechanischen Kontakt der aus leitendem Material ausgebildeten Trägern 21 und 22.

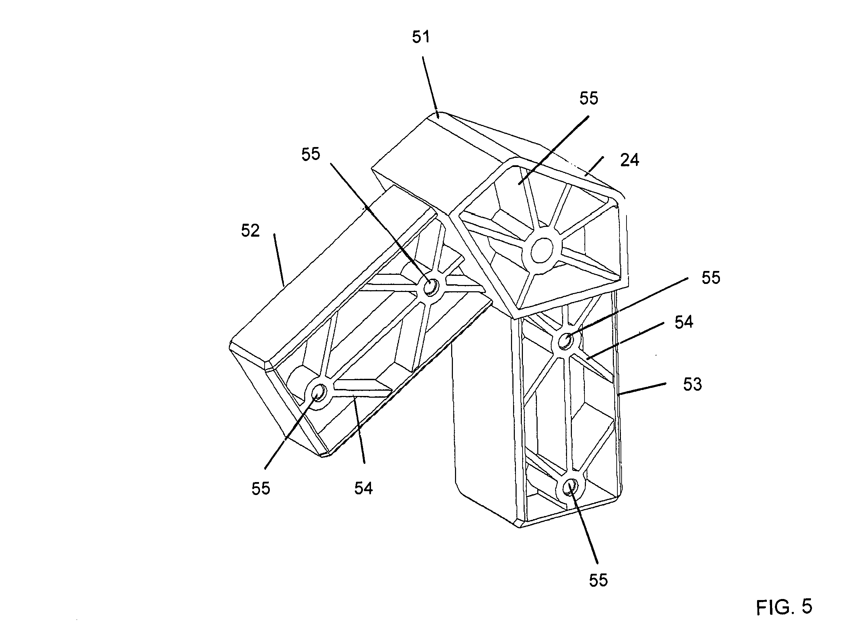

In Fig. 5 ist das Verbindungselement 24 dargestellt bevor es in den Stützträger 22 oder Verbindungsträger 21 eingeführt wurde. Das Verbindungselement weist ein Kopfstück 51 und zwei Kupplungselemente 52 und 53 auf. Die Kupplungselemente werden in die hohlen Träger 21 und 22 eingeführt, das Kupplungselement 52 wird, wie in Fig. 2 zu erkennen ist, in den Verbindungsträger 21 eingeführt, während das Kupplungselement 53 in den Stützträger 22 eingeführt wird. Aus Gewichts- und Materialersparnisgründen sind die Verbindungselemente nicht massiv ausgeführt. Vielmehr weisen das Kopfstück und die Kupplungselemente Verstärkungsrippen 54 auf. Die Kupplungselemente 52 und 53 weisen weiterhin Bohrungen 55 auf, die im eingesteckten Zustand mit Bohrungen in den Trägern 21 und 22 fluchten, so dass ein Verbindungsstift wie beispielsweise eine Schraube 80 durchgeführt werden kann, wie in Fig. 2 zu erkennen ist. Die Verbindungselemente sind vorzugsweise im Spritzgussverfahren hergestellt und weisen polymere Werkstoffe auf. Um dem Alterungsprozess durch abgehende Ströme weiter entgegenzuwirken werden die Solarmodule 10 zwischen einer Klemmleiste 40 und einem Vorsprung 26, der an dem Verbindungsträger ausgeführt ist eingeklemmt, wobei ein Kunststoffgummiprofil in der Aussparung zwischen der Klemmleiste 40 und dem Vorsprung 26 verwendet wird, um das Solarmodul weiter zu isolieren.

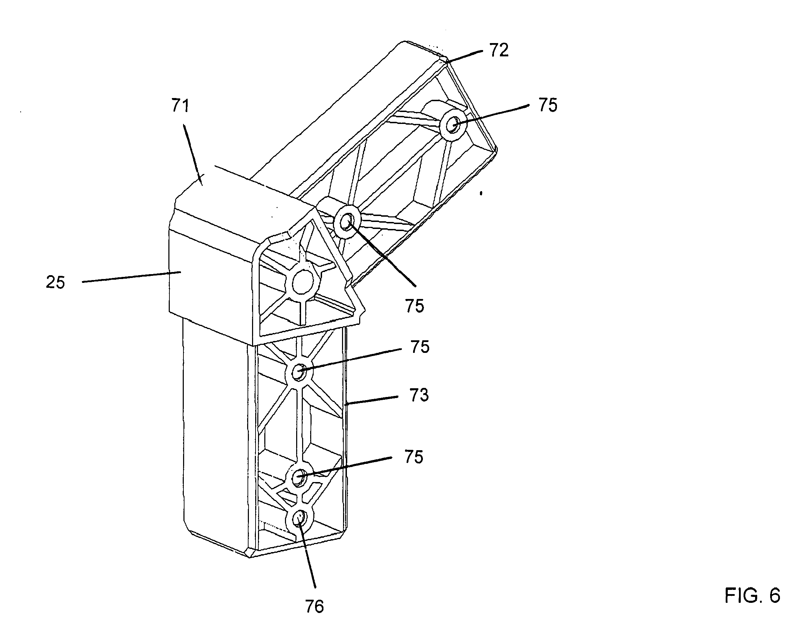

In Fig. 3 ist die Verbindung des unteren Endes des Solarmoduls 10 mit dem Stützträger 30 näher dargestellt. Der Verbindungsträger 21 wird mit dem unteren Stützträger 23 über ein Verbindungselement 25 verbunden, das im nicht eingefügten Zustand in Fig. 6 näher dargestellt ist. Das Verbindungselement 25 weist ähnlich wie das Verbindungselement 24 ein Kopfstück 71 und zwei Kupplungselemente 72, 73 auf. Das Kupplungselement 72 ist vollständig in den Verbindungsträger 21 eingeführt. Wie in Fig. 3 zu erkennen ist, ist der Stützträger 23 nur durch zwei Seitenwände 23a und 23b gebildet zwischen denen das Kupplungselement 73 eingeführt ist, so dass an der Vorderseite, wie in Fig. 3 zu erkennen ist, das Kupplungselement 73 sichtbar ist. Die Kupplungselemente 72 und 73 werden auf ähnliche Weise wie die Kupplungselemente 52 und 53 mit den Trägern verbunden. Dies bedeutet, sie weisen Bohrungen 75 auf, mit denen das Verbindungselement 25 über Verbindungsstifte 80 mit dem Träger 21 bzw. 23 verbunden wird. Eine weitere Bohrung 76 im Kupplungselement 73 dient zur Befestigung des Stützträgers 23 und des Verbindungselements 25 mit dem Träger 30, wie in Fig. 3 zu erkennen ist.

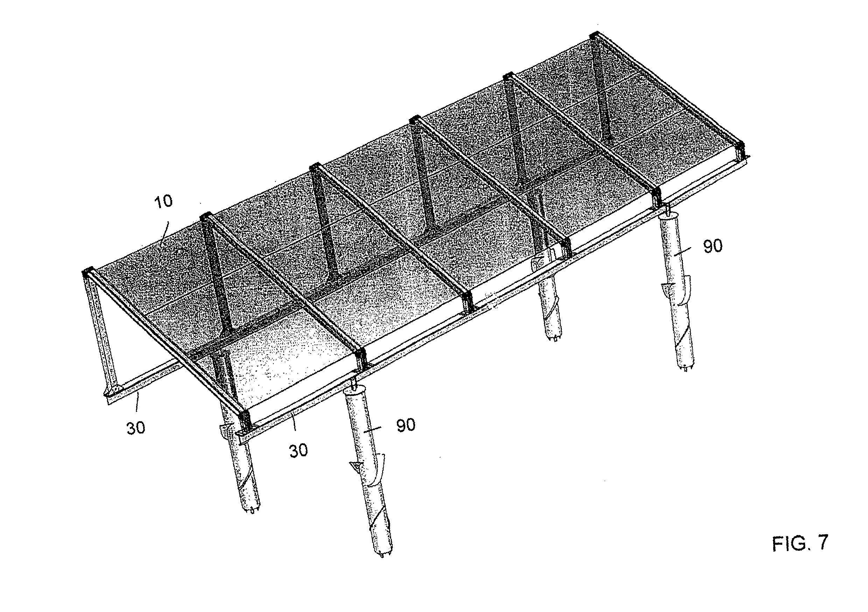

In Fig. 7 ist zu erkennen, wie die Träger 30 über Stützpfähle 90 in der Erde befestigt werden können, falls das Aufständerungssystem von Fig. 7 auf einer Freifläche verwendet wird. Bei der Verwendung auf Dächern können die Stützpfähle 90 selbstverständlich entfallen. Hier werden nur die Träger 30 auf dem Dach befestigt. Wie aus den gezeigten Figuren zu erkennen ist, können die Aufständerungsvorrichtungen einfach und fehlerfrei zusammengebaut werden.

In einer weiteren, nicht gezeigten Ausführungsform ist es auch möglich, die Verbindung des Stützträgers 22 zum Träger 30 in Fig. 1 durch nicht gezeigte Verbindungselemente zu isolieren. Dieses Verbindungselement ist dann ähnlich wie das Verbindungselement 25 am unteren Ende mit dem Träger 30 verbunden während das obere Ende mit dem Stützträger 22 verbunden ist. In diesem Fall würden die beiden Kupplungselemente entgegengesetzt zueinander vom Kopfstück aus verlaufen.

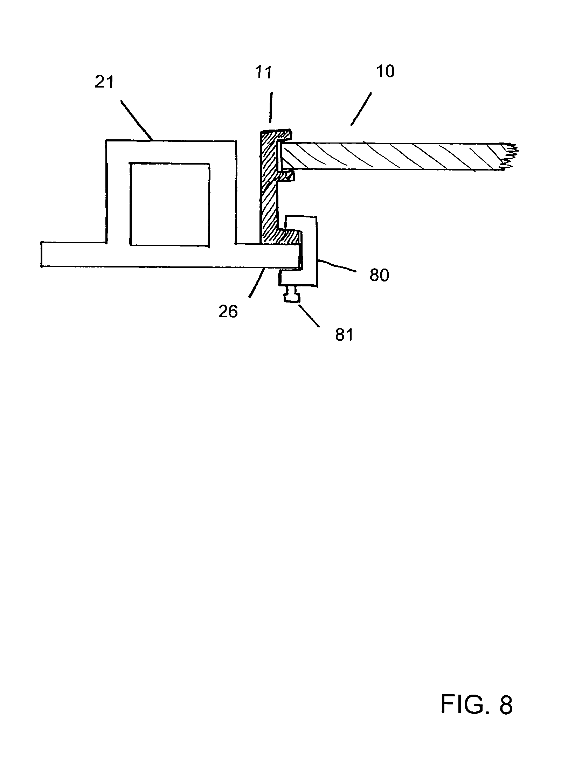

Fig. 8 zeigt eine weitere Möglichkeit, wie eine Seitenkante eines Solarmoduls 10 von einem Verbindungsträger 21 gehalten werden kann. Die Seitenkante des Solarmoduls 10 umfasst eine Rahmung 11, die sich über einen Teil der Seitenkante oder über die gesamte Seitenkante erstrecken kann. Die Rahmung 11, die Teil des Solarmoduls 10 ist, ist mit einer Klemme 80 an einem Vorsprung 26, der an dem Verbindungsträger 21 vorgesehen ist, festgeklemmt. Dies kann beispielsweise mittels eines Bolzens oder einer Schraube 81 erfolgen. Andere Klemmelemente können ebenfalls zum Einsatz kommen, um einen Reibschluss zwischen Rahmung 11 und Vorsprung 26 zu erzeugen. Bei der veranschaulichten Ausführungsform ist eine einfache Montage und Demontage der Solarmodule möglich. Da die Solarmodule über die gesamte Länge ihrer Seitenkante auf dem Vorsprung aufliegen können und damit keine punktuelle Belastung erfolgt, können des weiteren Verwindungen oder Verdrehungen des Solarmoduls vermieden werden.

Weitere Ausführungsformen sind selbstverständlich auch möglich, wie z.B. eine formschlüssige Verbindung zwischen dem Verbindungsträger und dem Solarmodul.

Die vorab beschriebenen Ausführungsformen können selbstverständlich kombiniert werden. Die in Fig. 8 gezeigte Ausführungsform kann beispielsweise in den mit Bezug auf Figuren 1 und 7 beschriebenen Aufständerungssystemen zum Einsatz kommen.

Zusammenfassend hat das erfinderische Aufständerungssystem bestehend aus mehreren Aufständerungsvorrichtungen den Vorteil, dass der Materialaufwand durch die tragenden Solarmodule erheblich verringert wird, die Aufbauzeiten für ein fertiges Solarsystem verringert werden und Solarmodule unterschiedlicher Größe einfach verbaut werden können. Auch wird das Solarmodul gegenüber dem Untergrund isoliert.

## Patentansprüche

1. Aufständerungssystem zur Befestigung eines Solarmoduls, mit einem ersten Verbindungsträger (20), der eine Seitenkante eines Solarmoduls (10) hält, und einem zweiten Verbindungsträger (20), der eine andere Seitenkante des Solarmoduls (10) hält, wobei das Solarmodul (10) als tragendes Modul an den beiden Seitenkanten gehalten die beiden Verbindungsträger (20) verbindet,
wobei das Aufständerungssystem für den ersten und den zweiten Verbindungsträger jeweils einen ersten und einen zweiten Stützträger (22, 23) umfasst, die an einem Ende und an dem anderen Ende des jeweiligen Verbindungsträgers (21) angeordnet sind und mit denen das Aufständerungssystem auf einem Untergrund (30) befestigt ist.

2. Aufständerungssystem nach Anspruch 1, **dadurch gekennzeichnet, dass** der erste und der zweite Verbindungsträger jeweils durchgehend ist und eine Auflagefläche für ein Solarmodul oder für mehrere, nebeneinander angeordnete Solarmodule bildet.

3. Aufständerungssystem nach Anspruch 1 oder 2, **dadurch gekennzeichnet, dass** das Solarmodul über die gesamte Länge der jeweiligen Seitenkante auf dem ersten und dem zweiten Verbindungsträger aufliegt.

4. Aufständerungssystem nach einem der vorstehenden Ansprüche, **dadurch gekennzeichnet, dass**
der erste und der zweite Verbindungsträger jeweils einen Vorsprung (26) und eine Klemmleiste (40) aufweisen, wobei die Klemmleiste an dem Verbindungsträger (21) befestigbar ist, wobei die eine Seitenkante des Solarmoduls zwischen dem Vorsprung (26) und der am Verbindungsträger befestigten Klemmleiste (40) gehalten wird.

5. Aufständerungssystem nach Anspruch 4, **dadurch gekennzeichnet, dass** die Klemmleiste (40) im befestigten Zustand im wesentlichen parallel zu einer Fläche des jeweiligen Verbindungsträgers (21) angeordnet ist, seitlich über den Verbindungsträger übersteht und mit dem Vorsprung (26) eine Aufnahme zur Aufnahme der Seitenkante des Solarmoduls (10) bildet.

6. Aufständerungssystem nach Anspruch 4 oder 5, **dadurch gekennzeichnet, dass** der Vorsprung (26) an einer Seitenfläche des jeweiligen Verbindungsträgers ausgebildet ist, wobei die Seitenkante des Solarmoduls (10) auf dem Vorsprung (26) aufliegt.

7. Aufständerungssystem nach einem der Ansprüche 4-6, **dadurch gekennzeichnet, dass** jeweils ein Vorsprung (26) an gegenüberliegenden Seitenflächen des jeweiligen Verbindungsträgers (21) ausgebildet ist, wobei zwischen einem Vorsprung (26) und der Klemmleiste (40) ein Solarmodul mit einer ersten Dicke einklemmbar ist, wobei der Vorsprung so an dem Verbindungsträger (21) angeordnet ist, dass bei einer Drehung des Verbindungsträgers (21) entlang seiner Längsachse zwischen dem Vorsprung (26) und der Klemmleiste (40) ein Solarmodul mit einer zweiten Dicke einklemmbar ist, die größer als die erste Dicke ist.

8. Aufständerungssystem nach einem der Ansprüche 4-7, **dadurch gekennzeichnet, dass** die Klemmleiste (40) derart ausgebildet ist, dass sie, wenn sie am Verbindungsträger (21) befestigt ist, die Seitenkanten von 2 benachbarten Solarmodulen (10) klemmend befestigt.

9. Aufständerungssystem nach einem der Ansprüche 4-8, **dadurch gekennzeichnet, dass** die Klemmleiste (40) im wesentlichen über die gesamte Länge des jeweiligen Verbindungsträgers (21) verläuft.

10. Aufständerungssystem nach einem der vorstehenden Ansprüche, **dadurch gekennzeichnet, dass** der erste und der zweite Verbindungsträger jeweils einen Vorsprung (26) aufweisen, wobei die Seitenkante des Solarmoduls (10) über eine kraftschlüssige oder formschlüssige Verbindung mit dem Vorsprung des jeweiligen Verbindungsträgers (21) zum Halten des Solarmoduls verbunden ist.

11. Aufständerungssystem nach Anspruch 10, wobei die Seitenkanten des Solarmoduls (10) eine Rahmung (11) umfassen, und wobei die Rahmung (11) mittels eines Klemmelements (80) zum Ausbilden einer kraftschlüssigen Verbindung an dem Vorsprung (26) des jeweiligen Verbindungsträgers (21) festgeklemmt ist.

12. Aufständerungssystem nach einem der Ansprüche 4-11, **dadurch gekennzeichnet, dass** der Vorsprung (26) im wesentlichen über die gesamte Länge des Verbindungsträgers (21) verläuft.

13. Aufständerungssystem nach einem der vorstehenden Ansprüche, **dadurch gekennzeichnet, dass** die Verbindungsträger (21) und die Stützträger (22, 23) aus leitendem Material ausgebildet sind.

14. Aufständerungssystem nach einem der vorstehenden Ansprüche, **dadurch gekennzeichnet, dass** zwischen dem Verbindungsträger und dem Stützträger jeweils ein Verbindungselement (24, 25) aus nichtleitendem Material angeordnet ist, das das Solarmodul (10) gegenüber dem Untergrund isoliert.

15. Aufständerungssystem nach Anspruch 14, **dadurch gekennzeichnet, dass** das Verbindungselement (24, 25) lösbar mit dem Verbindungsträger (21) und dem Stützträger (22, 23) verbunden ist.

16. Aufständerungssystem nach Anspruch 14 oder 15, **dadurch gekennzeichnet, dass** das Verbindungselement (24, 25) ein Kopfstück (51, 71) und zwei Kupplungselemente (52, 53, 72, 73) aufweist, wobei die zwei Kupplungselemente im Montagezustand in den Verbindungsträger (21) und den Stützträger (22, 23) eingeführt sind.

17. Aufständerungssystem nach einem der vorstehenden Ansprüche, **dadurch gekennzeichnet, dass** ein längerer und ein kürzerer Stützträger für jeweils den ersten und den zweiten Verbindungsträger vorgesehen sind, wobei zwischen dem längeren Stützträger (22) und dem Untergrund ein nichtleitendes Verbindungselement vorgesehen ist.

18. Aufständerungssystem nach einem der vorstehenden Ansprüche, **dadurch gekennzeichnet, dass** die Stützträger (22, 23) auf ihrer Unterseite jeweils auf einem im Untergrund oder auf dem Untergrund angeordneten Querträger (30) befestigt sind.
